# FASCICULE DE BREVET EUROPEEN

(11) **EP 0 893 636 B1**
(45) Date de publication et mention de la délivrance du brevet: **20.11.2002**
(21) Numéro de dépôt: 98401707.9
(22) Date de dépôt: 06.07.1998
(51) Int. Cl.: F16K 31/06

(54) **Agencement d'électrovanne à moyen de fixation élastique sur son support, tel qu'un bloc hydraulique**
Magnetventilanordnung mit elastischem Mittel zur Befestigung auf seinem Stützblock, wie Hydraulikblock
Solenoid valve device with elastic means of fixation to its support, such as a hydraulic block

(30) Priorité: 22.07.1997 FR 9709295
(43) Date de publication de la demande: 27.01.1999
(73) Titulaire: AUTOMOBILES PEUGEOT, 75116 Paris (FR); AUTOMOBILES CITROEN, 92200 Neuilly-sur-Seine (FR)
(72) Inventeur: Veret, Dominique, 91370 Verrieres le Buisson (FR); Lamorlette, Bruno, 78800 Houilles (FR)
(74) Mandataire: Berger, Helmut

(56) Documents cités:
- EP-A- 0 520 047
- FR-A- 1 212 280
- FR-A- 1 408 676
- FR-A- 2 696 226
- GB-A- 2 189 010

## Description

L'invention concerne un agencement d'électrovanne du type comprenant une électrovanne se composant d'une bobine et d'une masse polaire et des moyens élastiques destinés à plaquer l'électrovanne contre son support tel qu'un bloc hydraulique.

Un agencement de ce type est déjà connu par le brevet européen N° 0 520 047. Dans cet agencement, l'électrovanne est reliée par des fils flexibles à un calculateur destiné à commander l'électrovanne. Ces moyens élastiques permettent aussi d'absorber les dispersions géométriques et les différences de dilatation. Cependant ils ne résolvent pas les problèmes des dispersions géométriques et de dilatation différentielles entre la bobine de l'électrovanne et la masse polaire. L'agencement connu ne convient également pas lorsque la liaison entre l'électrovanne et le calculateur est rigide.

L'invention a pour but de proposer un agencement d'électrovanne qui pallie les inconvénients de l'état de la technique qui vient d'être décrit.

Pour atteindre ce but, l'agencement selon l'invention est caractérisé en ce que la bobine et la masse polaire sont séparées et susceptibles d'un mouvement relatif l'une par rapport à l'autre et en ce que des moyens élastiques de maintien sont interposés entre la bobine et le support, d'une part, et la bobine et la masse polaire, d'autre part.

Selon une caractéristique de l'invention, un premier moyen élastique est interposé entre le support et l'extrémité adjacente de la bobine et un second moyen élastique est interposé entre l'autre extrémité de la bobine et la masse polaire, les moyens élastiques étant élastiquement déformables dans la direction axiale de la bobine.

Selon une autre caractéristique de l'invention, les moyens élastiques sont formés par des blocs en matériau souple tel que du caoutchouc.

Selon encore une autre caractéristique de l'invention, les moyens élastiques comprennent des pattes flexibles solidaires de la carcasse de la bobine.

Selon encore une autre caractéristique de l'invention, les moyens élastiques comprennent un élément élastique d'application sélective de la masse polaire sur le support, qui est interposé entre la masse polaire et un organe solidaire du bloc.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :

La figure 1 est une vue en coupe d'un premier mode de réalisation d'un agencement d'électrovanne selon l'invention, dans la direction axiale de l'électrovanne.

La figure 2 est une vue en coupe, dans la direction axiale, d'un deuxième mode de réalisation d'une électrovanne selon l'invention.

La figure 3 montre, de façon schématique, un bloc hydraulique pour une suspension hydropneumatique de véhicule automobile, pourvu de plusieurs agencements d'électrovanne selon l'invention.

La figure 4 est une vue en coupe le long de la ligne IV-IV de la figure 3.

L'invention concerne un agencement d'électrovanne du type décrit dans la demande de brevet français FR-A-2 754 572 appartenant aux demanderesses. Cet agencement comprend une électrovanne 1 et une bride 2 pour la fixation de cette dernière sur un support 3 tel qu'un bloc hydraulique pourvu d'un évidement dans lequel est logé le corps 5 de l'électrovanne. A l'état fixé sur le support, de la bride 2, l'électrovanne 1 est retenue sur le support grâce à des surfaces coopérantes d'appui de la bride et de l'électrovanne, de formes coniques allant en s'élargissant en direction du fond de l'évidement et indiquées en 6.

Concernant l'électrovanne, il suffit pour la compréhension de l'invention d'indiquer qu'elle comprend le corps susmentionné 5 qui se compose de deux parties cylindriques, à savoir une partie inférieure 7 engagée dans l'évidement du support 3 et une partie supérieure 8 de plus faible diamètre, un noyau 9 monté mobile dans l'axe de la partie supérieure 8, avec interposition d'une cale d'entrefer 10, un tube 11 en un matériau amagnétique entourant le noyau 9 et la partie 8, ainsi qu'un ensemble formé par une bobine 13 et une masse polaire 14 et entourant coaxialement le tube 11. Cet ensemble repose, à l'état assemblé, sur la surface supérieure de la bride 2.

Lors de l'excitation de la bobine 13, le champ magnétique ainsi généré à travers la masse polaire 14, la bride 2, le corps 5, le noyau 9 et le tube amagnétique 11 crée un effort sur le noyau 9. Cet effort provoque le déplacement du noyau vers la partie de corps 8 jusqu'au plaquage de celui-ci sur la cale d'entrefer 10. Lors de ce déplacement du noyau, un poussoir 16 solidaire du noyau repousse une bille 17 de son siège 18 pour ouvrir un canal de communication entre l'ouverture d'entrée de liquide 20 dans la face frontale du corps 5 et l'ouverture de sortie 21 dans la face cylindrique périphérique de ce corps. Lorsque le courant d'alimentation de la bobine est supprimé, un ressort 22 ramène la bille 17 sur le siège 18 pour assurer l'étanchéité entre les ouvertures d'entrée et de sortie 20 et 21.

Comme on le voit sur les figures, la bobine 13 entourée d'une carcasse 24 est reliée électriquement, de façon rigide, par des moyens électriquement conducteurs 25 à un calculateur 26 destiné à commander l'électrovanne. Les moyens conducteurs sont fixés rigidement sur le calculateur, par exemple par soudage en 27.

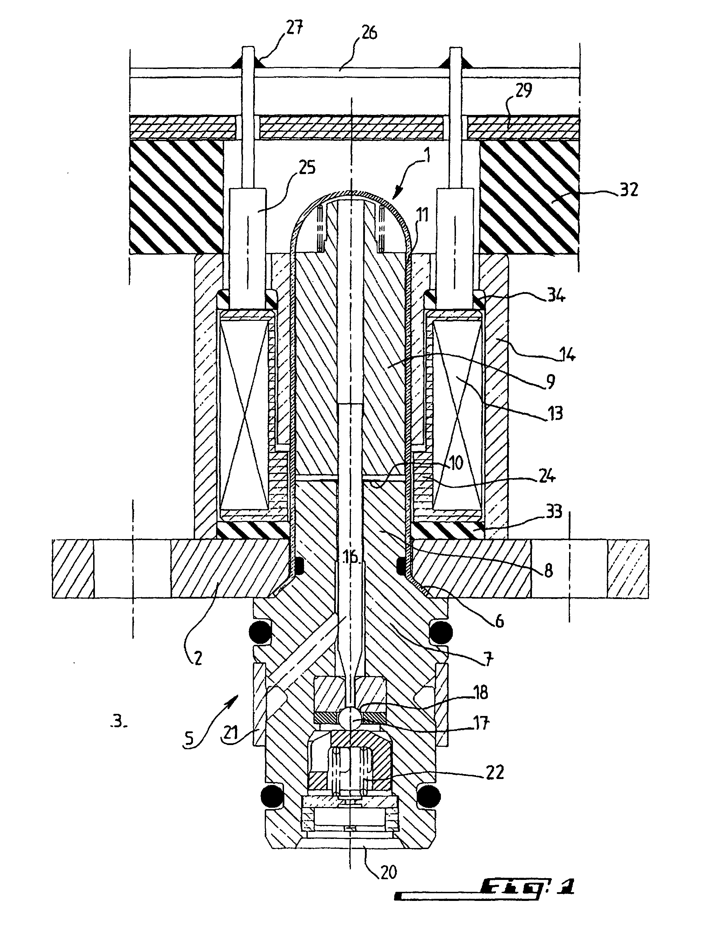

Conformément à l'invention, comme il ressort des figures, la bobine 13 entourée de sa carcasse en matière plastique 24 et la masse polaire 14 sont réalisées sous forme de pièces séparées susceptibles d'un mouvement relatif l'une par rapport à l'autre. Cette configuration de la bobine et de la masse polaire et le montage de cet ensemble entre la bride 2 et la paroi supérieure 29 du capot de protection de l'électrovanne permettent de résoudre le problème des dispersions géométriques et des dilatations différentielles entre la bobine et la masse polaire. A cette fin on constate tout d'abord qu'un bloc en matériau souple 32 tel que du caoutchouc est interposé entre la paroi 29 et la face frontale supérieure de la masse polaire 14. Puis, des seconds moyens de support élastiques 33 réalisés sous forme d'une rondelle 33 sont interposés entre la bride 2 et la base de la carcasse 24 solidaire de la bobine 13. Enfin des troisièmes moyens élastiques, sur la figure 1 également réalisés sous forme d'une rondelle en un matériau souple 34, sont interposés entre la face frontale supérieure de la carcasse 24 et la face supérieure de la cavité de la masse polaire 14 qui loge la bobine.

On comprend aisément que les moyens de support élastiques 33 et 34 permettent d'absorber les variations de position de la bobine 13 et de la masse polaire 14 par rapport au calculateur 26, qui sont provoquées par des dispersions de cote ou des changements de température. Ainsi ces dispersions ne provoquent plus de contraintes sur la fixation bobine/calculateur. En ce qui concerne le bloc élastique 32, il assure un plaquage permanent de la masse polaire 14 sur la bride 2 pour assurer la performance magnétique sans empêcher la démontabilité de l'électrovanne.

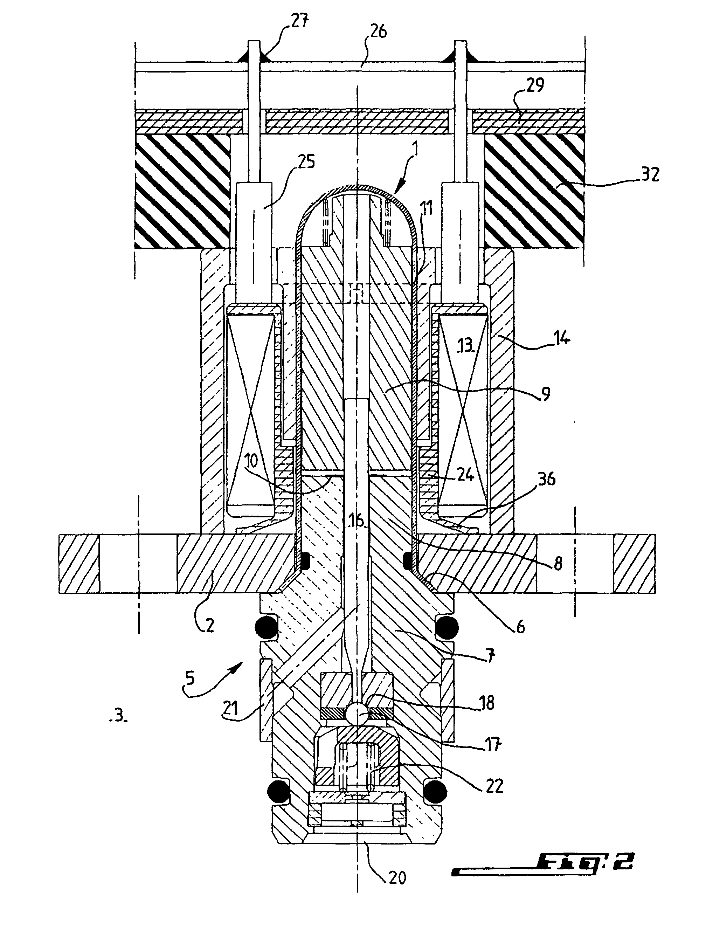

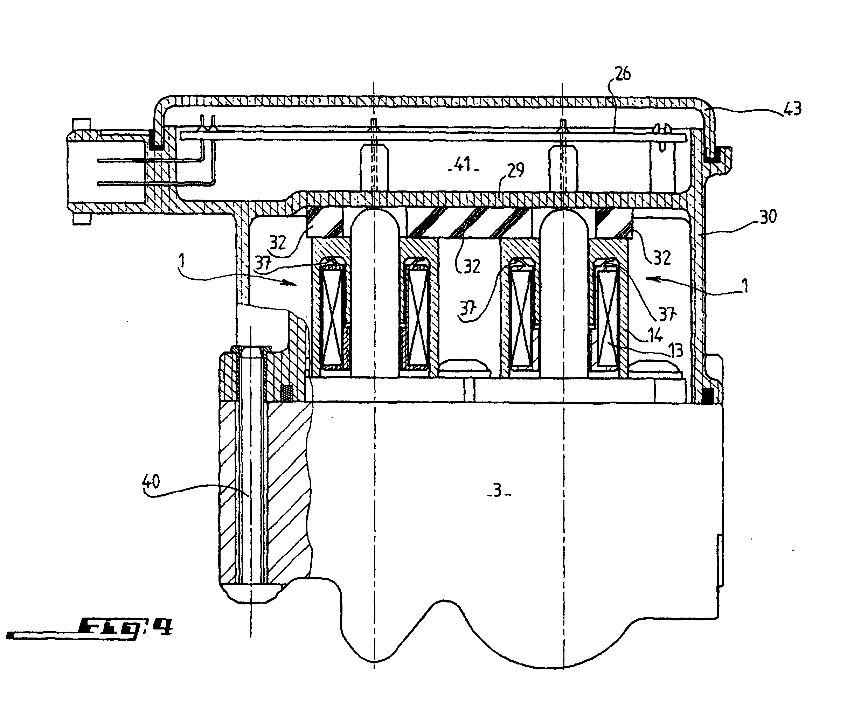

La figure 2 montre un deuxième mode de réalisation des moyens élastiques interposés, d'une part, entre la bobine et la bride et, d'autre part, entre la bobine et la masse polaire. Sur la figure 2, ces moyens élastiques comportent une paire de pattes flexibles 36 diamétralement opposées et solidaires de la carcasse 24, à la base de celle-ci, qui prennent appui sur la bride 2. Une autre paire de pattes 37 également solidaires de la carcasse, à l'extrémité supérieure de celle-ci, est interposée entre cette extrémité et la masse polaire. La paire de pattes 37 qui est angulairement décalée de 90° par rapport à la paire de pattes 36 n'apparaît pas sur la figure 2 mais est indiquée sur la figure 4. Les pattes font partie intégrante de la carcasse 24 et sont par exemple venues de moulage avec cette dernière, la carcasse étant alors réalisée en matière plastique.

Il est bien évident que les moyens élastiques peuvent être réalisés sous tout autre forme appropriée, par exemple sous forme de ressorts.

Bien entendu, l'électrovanne pourrait être fixée directement sur le support 3, sans interposition de la bride 2.

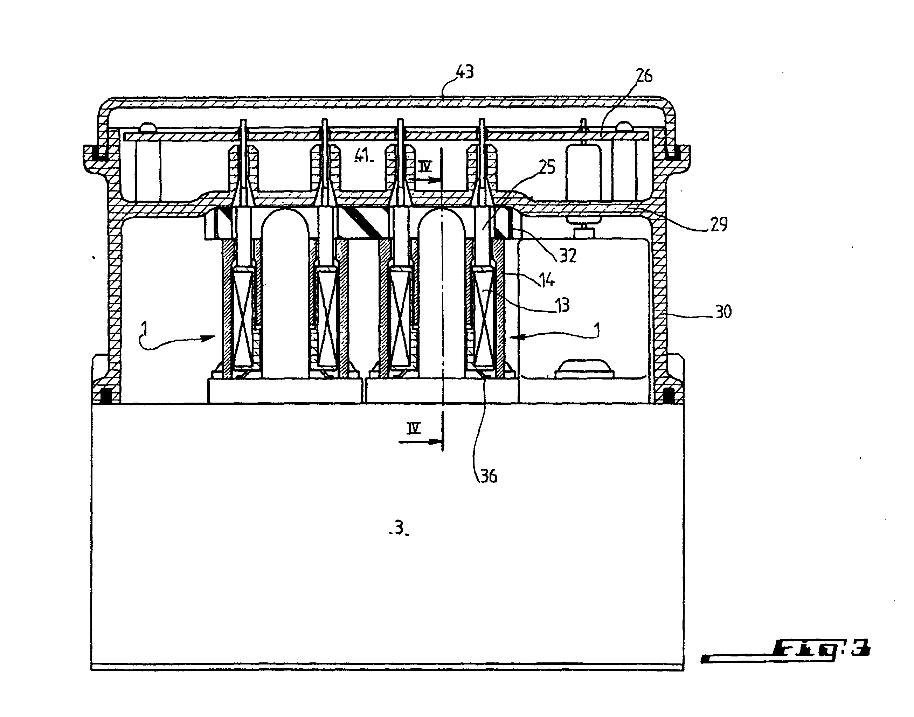

Les figures 3 et 4 illustrent l'application de l'invention à un système de commande d'une suspension hydropneumatique de véhicule automobile tel que décrit dans la demande de brevet français FR-A-2 750 652 appartenant aux demanderesses. Sur ces figures, le bloc hydraulique constitue le bloc de support 3 des figures 1 et 2 et deux électrovannes 1 sont enfermées dans un capot de protection 30 fixé sur le support 3 par des vis 40 (figure 4). La paroi supérieure du capot 30 est configurée de façon à délimiter une chambre 41 qui loge le calculateur 26 et peut être fermée par un couvercle 43.

## Revendications

1. Agencement d'électrovanne du type comprenant une électrovanne pourvue d'une bobine et d'une masse polaire, et des moyens élastiques destinés à plaquer l'électrovanne contre son support tel qu'un bloc hydraulique, **caractérisé en ce que** la bobine (13) et la masse polaire sont réalisées sous forme de pièces séparées et susceptibles d'un mouvement relatif l'une par rapport à l'autre et **en ce que** des moyens élastiques de maintien (33, 34 ; 36, 37) sont interposés entre la bobine (13) et le support (2 ; 3), d'une part, et la bobine (13) et la masse polaire (14), d'autre part.

2. Agencement d'électrovanne selon la revendication 1, **caractérisé en ce que** les moyens élastiques de maintien constituent des moyens d'absorption des contraintes provenant des dispersions géométriques et de dilatations différentielles entre la bobine et la masse polaire (14), lorsque l'électrovanne est rigidement reliée à un calculateur (26).

3. Agencement d'électrovanne selon l'une des revendications 1 ou 2, **caractérisé en ce qu'**un premier moyen élastique (33 ; 36) est interposé entre le support (2 ; 3) et l'extrémité adjacente de la bobine (13) et un second moyen élastique (34 ; 37) est interposé entre l'autre extrémité de la bobine (13) et la masse polaire (14), ces moyens étant élastiquement déformables dans la direction axiale de la bobine.

4. Agencement d'électrovanne selon l'une des revendications 1 à 3, **caractérisé en ce que** les moyens élastiques (33, 34) sont formés par des blocs en matière souple telle que du caoutchouc.

5. Agencement d'électrovanne selon l'une des revendications 1 à 3, **caractérisé en ce que** les moyens élastiques comprennent des pattes flexibles (36, 37) solidaires de la carcasse (24) de la bobine (13) au niveau des deux extrémités de celle-ci.

6. Agencement selon la revendication 5, **caractérisé en ce que** les pattes flexibles (36, 37) font partie intégrante de la carcasse (24) de la bobine (13), en étant avantageusement venus de moulage avec cette dernière.

7. Agencement d'électrovanne selon l'une des revendications 5 ou 6, **caractérisé en ce que** la carcasse (24) de la bobine (13) est réalisée en matière plastique.

8. Agencement selon l'une des revendications 1 à 7, **caractérisé en ce que** les moyens élastiques comprennent un élément élastique (32) d'application sélective de la masse polaire (14) sur le support (2 ; 3), qui est interposé entre cette masse et un organe (29) solidaire du bloc.

9. Agencement d'électrovanne selon l'une des revendications 1 à 8, **caractérisé en ce que** l'électrovanne repose sur une bride (2) fixée amoviblement sur un bloc hydraulique (3).

## Patentansprüche

1. Elektromagnetventilanordnung vom Typ mit einem Elektromagnetventil, das mit einer Spule und einer Polmasse versehen ist, und mit Federmitteln, die dazu bestimmt sind, das Elektromagnetventil an einen Träger, etwa einen Hydraulikblock, anzudrücken, **dadurch gekennzeichnet, dass** die Spule (13) und die Polmasse als separate und zueinander bewegliche Teile ausgeführt sind und dass die Haltefedermittel (33, 34; 36,37) einerseits zwischen der Spule (13) und dem Träger (2; 3) und anderseits zwischen der Spule (13) und der Polmasse (14) eingefügt sind.

2. Elektromagnetventilanordnung nach Anspruch 1, **dadurch gekennzeichnet, dass** die Haltefedermittel aus Mitteln zum Aufnehmen der Spannungen bestehen, die aus geometrischen Schwankungen und unterschiedlichen Ausdehnungen der Spule und der Polmasse (14) stammen, wenn das Elektromagnetventil starr mit einem Rechner (26) verbunden ist.

3. Elektromagnetventilanordnung nach einem der Ansprüche 1 oder 2, **dadurch gekennzeichnet, dass** ein erstes Federmittel (33; 36) zwischen dem Träger (2; 3) und dem angrenzenden Ende der Spule (13) und ein zweites Federmittel (34; 37) zwischen dem anderen Ende der Spule (13) und der Polmasse (14) eingefügt ist, wobei diese Mittel in axialer Richtung der Spule elastisch verformbar sind.

4. Elektromagnetventilanordnung nach einem der Ansprüche 1 bis 3, **dadurch gekennzeichnet, dass** die Federmittel (33, 34) durch Blöcke aus nachgiebigem Material, wie etwa Gummi, gebildet sind.

5. Elektromagnetventilanordnung nach einem der Ansprüche 1 bis 3, **dadurch gekennzeichnet, dass** die Federmittel flexible Laschen (36, 37) aufweisen, die fest mit dem Gehäuse (24) der Spule (13) im Bereich ihrer beiden Enden verbunden sind.

6. Elektromagnetventilanordnung nach Anspruch 5, **dadurch gekennzeichnet, dass** die flexiblen Laschen (36, 37) integrierte Bestandteile des Gehäuses (24) der Spule (13) sind, indem sie vorteilhaft an diesem angeformt sind.

7. Elektromagnetventilanordnung nach einem der Ansprüche 5 oder 6, **dadurch gekennzeichnet, dass** das Gehäuse (24) der Spule (13) aus Kunststoff hergestellt ist.

8. Elektromagnetventilanordnung nach einem der Ansprüche 1 bis 7, **dadurch gekennzeichnet, dass** die Federmittel ein Federelement (32) zum selektiven Anlegen der Polmasse (14) an den Träger (2; 3) enthalten, das zwischen dieser Masse und einem fest mit dem Block verbundenen Organ (29) eingefügt ist.

9. Elektromagnetventilanordnung nach einem der Ansprüche 1 bis 8, **dadurch gekennzeichnet, dass** das Elektromagnetventil auf einem Flansch (2) aufliegt, der abnehmbar am Hydraulikblock (3) befestigt ist.

## Claims

1. A solenoid valve device of the type comprising a solenoid valve provided with a coil and a polar mass, and elastic means adapted to retain the solenoid valve against its support, such as a hydraulic block, **characterised in that** the coil (13) and the polar mass are formed as separate elements capable of movement relative to one another, and **in that** elastic retaining means (33, 34; 36, 37) are interposed between the coil (13) and the support (2; 3) on one side and between the coil (13) and the polar mass (14) on the other.

2. A solenoid valve device according to Claim 1, **characterised in that** the elastic retaining means constitute means for absorbing the stresses resulting from the geometrical dispersion and differential expansion of the coil and of the polar mass (14) when the solenoid valve is rigidly attached to a controller (26).

3. A solenoid valve device according to one of claims 1 or 2, **characterised in that** first elastic means (33; 36) are interposed between the support (2; 3) and the adjacent end of the coil (13) and second elastic means (34; 37) are interposed between the other end of the coil (13) and the polar mass (14), these elastic means being elastically deformable in the axial direction of the coil.

4. A solenoid valve device according to one of claims 1 to 3, **characterised in that** the elastic means (33, 34) are formed by blocks of flexible material such as rubber.

5. A solenoid valve device according to one of claims 1 to 3, **characterised in that** the elastic means comprise flexible mounts (36, 37) permanently attached to the casing (24) of the coil (13) and located at the two ends of the latter.

6. A solenoid valve device according to Claim 5, **characterised in that** the flexible mounts (36, 37) form an integral part of the casing (24) of the coil (13), being advantageously moulded jointly with the latter.

7. A solenoid valve device according to one of claims 5 or 6, **characterised in that** the casing (24) of the coil (13) is made of plastics material.

8. A solenoid valve device according to one of claims 1 to 7, **characterised in that** the elastic means comprise an elastic element (32) permitting selective application of the polar mass (14) against the support (2; 3) and interposed between said mass and a member (29) integral with the block.

9. A solenoid valve device according to one of claims 1 to 8, **characterised in that** the solenoid valve rests on a flange (2) movably fixed to a hydraulic block (3).
